# EUROPÄISCHE PATENTANMELDUNG

(11) **EP 0 757 398 A1**
(43) Veröffentlichungstag der Anmeldung: **05.02.1997**
(21) Anmeldenummer: 96111346.1
(22) Anmeldetag: 13.07.1996
(51) Int. Cl.: H01M 8/24, H01M 8/12

(54) **Anordnung von mehreren Brennstoffzellen-Stacks zu einem Modul**

(30) Priorität: 25.07.1995 DE 19527376
(71) Anmelder: DORNIER GmbH, D-88039 Friedrichshafen (DE)
(72) Erfinder: Schamm, Reinhold, Dr.rer.nat.Phys., 88719 Stetten (DE); Späh, Richard, Dr.rer.nat.Phys., 88662 Überlingen (DE); Zurell, Klaus-Peter, Dipl.-Ing., 88045 Friedrichshafen (DE); Wegmann, Edmund, Techn., 88677 Markdorf (DE); Heitzer, Jörg, Dr.-Phys., 88090 Immenstaad (DE)
(74) Vertreter: Landsmann, Ralf

(57) **Zusammenfassung**

Die Erfindung betrifft eine Vorrichtung zur Energieerzeugung mit mehreren untereinander verschalteten Brennstoffzellen-Stacks.

Die Vorrichtung enthält mehrere untereinander verschaltete Brennstoffzellen-Stacks, sowie eine Brenngasführung und eine Abgasführung, eine Zuluftführung und Abluftführung sowie eine Abdichtung zwischen Zuluftbereich und Abluftbereich. Die Führung der Zuluft erfolgt mittels eines für mehrere Brennstoffzellen-Stacks gemeinsamen, nicht unmittelbar mit den Brennstoffzellen-Stacks verbundenem Gehäuse. Darüberhinaus sind zur Führung der Abluft mehrere Brennstoffzellen-Stacks auf einer gemeinsamen Basisplatte verschaltet, die als Tragelement oder Sockel für die Brennstoffszellen-Stacks dient.

Die Abdichtung des Zuluftbereichs und Abluftbereiches zwischen dem Anschlußelement und den Brennstoffzellen-Stacks ist derart gestaltet, daß auftretende mechanische Spannungen, bedingt durch Differenzen in der Thermaldehnung des Anschlußelementes und der Brennstoffzellen-Stacks oder bedingt durch Thermalverformungen, mittels der Abdichtung ausgeglichen werden. Die Brennstoffzellen-Stacks sind jeweils mit gasdichten Anschlußelementen für die Führung des Brenngases versehen. Alternativ kann auch eine interne Führung für das Brenngas vorhanden sein.

Durch die erfindungsgemässe Vorrichtung aus einzelnen, modular verschalteten Brennstoffzellen-Stacks kann ein Kraftwerk mit beträchtlicher Leistung realisiert werden.

## Beschreibung

Die Erfindung betrifft eine Vorrichtung zur Energieerzeugung, wobei mehrere Brennstoffzellen-Stacks miteinander verschaltet sind.

Bei der Beschreibung der Erfindung wird beispielhaft von von Festoxid-Brennstoffzellen ausgegangen, jedoch ist die erfindungsgemässe Vorrichtung auch für beliebige andere Brennstoffzellen-Typen geeignet.

Festelektrolyt-Brennstoffzellen sind elektrochemische Energiewandler, die Strom direkt aus gasförmigen Energieträgern (z.B. H₂, CO, CH₄) erzeugen. Sie basieren in der Regel auf Zirkonoxid als Sauerstoff-Ionen-leitendem Festelektrolyt und werden bei Temperaturen von ca. 800 bis 1000°C betrieben. Da sie nicht wie Wärmekraftmaschinen der Carnot-Regel unterliegen, erreichen sie deutlich höhere Wirkungsgrade von über 50 %. Deshalb und wegen ihrer geringen Emission von Schadstoffen haben sie ein hohes Potential als zukünftige Energiewandler, speziell wenn sie Erdgas als Primärenergieträger verwenden.

Im Hinblick auf Wirtschaftlichkeit und hohe Energiedichte ist ein planares Zelldesign vorteilhaft. Bei dieser Anordnung sind dünne Festelektrolytplatten beidseitig mit porösen Elektroden beschichtet und diese abwechselnd mit Verbindungselementen übereinander gestapelt, so daß eine bipolare Anordnung entsteht. Mehrere Einzelzellen können seriengeschaltet werden, indem sie übereinander gestapelt werden. Es entsteht ein kompakter Brennstoffzellen-Stack.

Die für Brennstoffzellen beschriebenen Anordnungen können auch für den Umkehrprozeß der Hochtemperatur-Elektrolyse verwendet werden, um aus Wasser bei ca. 800 bis 1000°C mit hohem Wirkungsgrad Wasserstoff herzustellen.

Folgende Techniken für die Verschaltung von Brennstoffzellen-Blöcken sind aus Veröffentlichungen bekannt:
Aus DE 43 24 907 A1 ist ein aus mehreren übereinander gestapelten Brennstoffzellen-Stacks bestehender Brennstoffzellen-Modul bekannt, mit einer Brenngasführung mittels Rohrleitungen und einer freien Luftzuführung innerhalb eines geschlossenen Gehäuses zu den Brennstoffzellen-Stacks. Die Brennstoffzellen-Stacks werden von einer Wand getragen und die Abluft wird mittels Rohrleitungen abgeführt.

Aus der EUROPEAN PATENT APPLICATION 0 450 336 A2 ist eine aus Brennstoffzellen bestehende Vorrichtung zur Energieerzeugung mit folgenden Merkmalen bekannt::
- Brenngas in einem Gehäuse frei geführt
- Brennstoffzellen-Stacks nicht gestapelt
- Luftzuführung mittels Rohren.

Aufgabe der Erfindung ist die Verschaltung von Brennstoffzellen-Stacks und deren Dichtung zur Erzielung einer hohen Packungsdichte, einer modularen und skalierfähigen Anordnung sowie einer einfachen Austauschbarkeit der einzelnen Brennstoffzellen-Stacks.

Diese Aufgabe wird durch den Gegenstand des Patentanspruchs 1 gelöst. Vorteilhafte Ausbildungen der Erfindung sind Gegenstand weiterer Ansprüche.

Die erfindungsgemässe Vorrichtung enthält mehrere untereinander verschaltete Brennstoffzellen-Stacks, sowie eine Brenngasführung und eine Abgasführung, eine Zuluftführung und Abluftführung sowie eine Abdichtung zwischen Zuluftbereich und Abluftbereich. Erfindungsgemäß erfolgt die Führung der Zuluft mittels eines für mehrere Brennstoffzellen-Stacks gemeinsamen, nicht unmittelbar mit den Brennstoffzellen-Stacks verbundenem Gehäuse. Darüberhinaus sind zur Führung der Abluft mehrere Brennstoffzellen-Stacks auf einer gemeinsamen Basisplatte verschaltet, die als Tragelement oder Sockel für die Brennstoffzellen-Stacks dient.
Die Abdichtung des Zuluftbereichs und Abluftbereiches zwischen dem Anschlußelement und den Brennstoffzellen-Stacks ist derart gestaltet, daß auftretende mechanische Spannungen, bedingt durch Differenzen in der Thermaldehnung des Anschlußelementes und der Brennstoffzellen-Stacks oder bedingt durch Thermalverformungen, mittels der Abdichtung ausgeglichen werden. Die Brennstoffzellen-Stacks sind jeweils mit gasdichten Anschlußelementen für die Führung des Brenngases versehen. Alternativ kann auch eine interne Führung für das Brenngas vorhanden sein.
Durch die erfindungsgemässe Vorrichtung aus einzelnen, modular verschalteten Brennstoffzellen-Stacks kann ein Kraftwerk mit beträchtlicher Leistung realisiert werden.

Die Erfindung wird anhand von Fig. näher erläutert. Es zeigen:
- Fig. 1 und 2:: die erfindungsgemässe Vorrichtung mit mehreren Brennstoffzellen-Modulen und Brennstoffzellen-Stacks
- Fig. 3:: die erfindungsgemässe Vorrichtung mit nebeneinander und übereinander gestapelten Brennstoffzellen-Stacks (teilweise explodiert) und
- Fig 4:: eine erfindungsgemässe Dichtung.

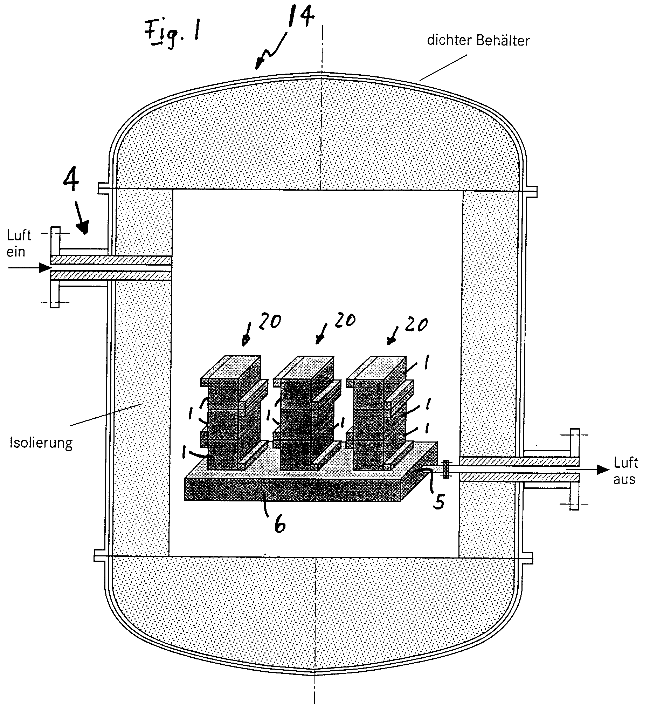

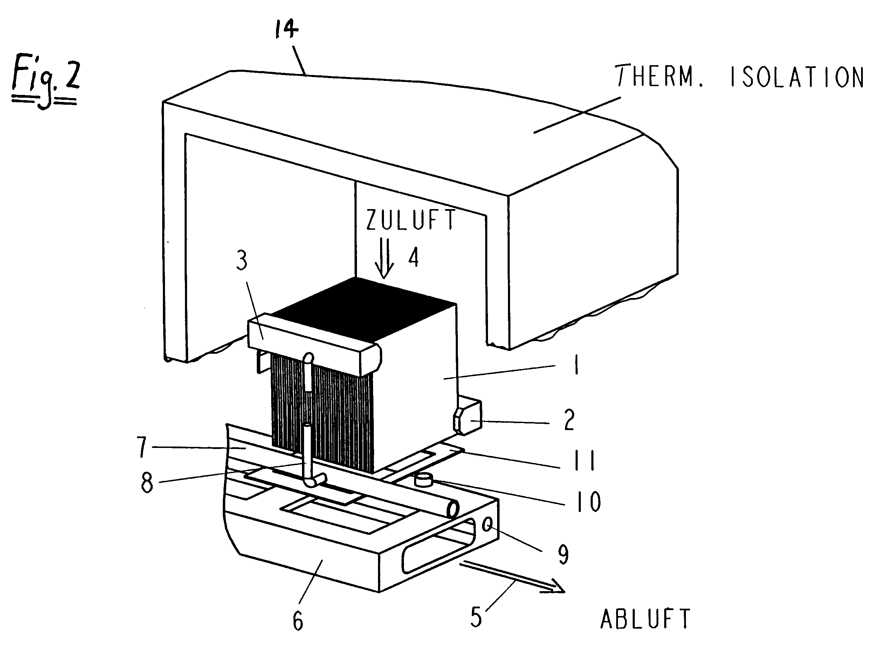

In Fig. 1 und 2 ist die prinzipielle Anordnung/Bauweise der modularen Verschaltung der Brennstoffzellen-Stacks dargestellt. Von mehreren nebeneinander oder hintereinander angeordneten Stacks ist in Fig. 2 nur ein Stack **1** dargestellt. Die zur Funktion der Brennstoffzellen-Stacks **1** erforderliche äußere Luftzuführung **4** geschieht durch Einleiten der Zuluft in ein dichtes Gehäuse **14** ohne ein direktes Anschlußelement an den einzelnen Brennstoffzellen-Stacks **1**. Dieses Gehäuse **14** sorgt für die Luftzuführung für mehrere Stacks **1**. In Fig. 1 sind mehrere Brennstoffzellen-Module **20** gezeigt; die Brenngasführung ist in Fig. 1 nicht dargestellt.

Zur Führung der Abluft werden die Brennstoffzellen-Stacks **1** auf einer für mehrere Brennstoffzellen-Module **20** gemeinsamen Basisplatte **6** angeordnet, die auch als Tragplatte oder Sockelplatte bezeichnet werden kann. In diese Basisplatte **6** ist unter anderem ein Kanal **5** zur Abluftführung integriert.

Basisplatte **6** trägt die Brennstoffzellen-Module **20**, die aus übereinander gestapelten Brennstoffzellen-Stacks **1** bestehen (Fig.2).

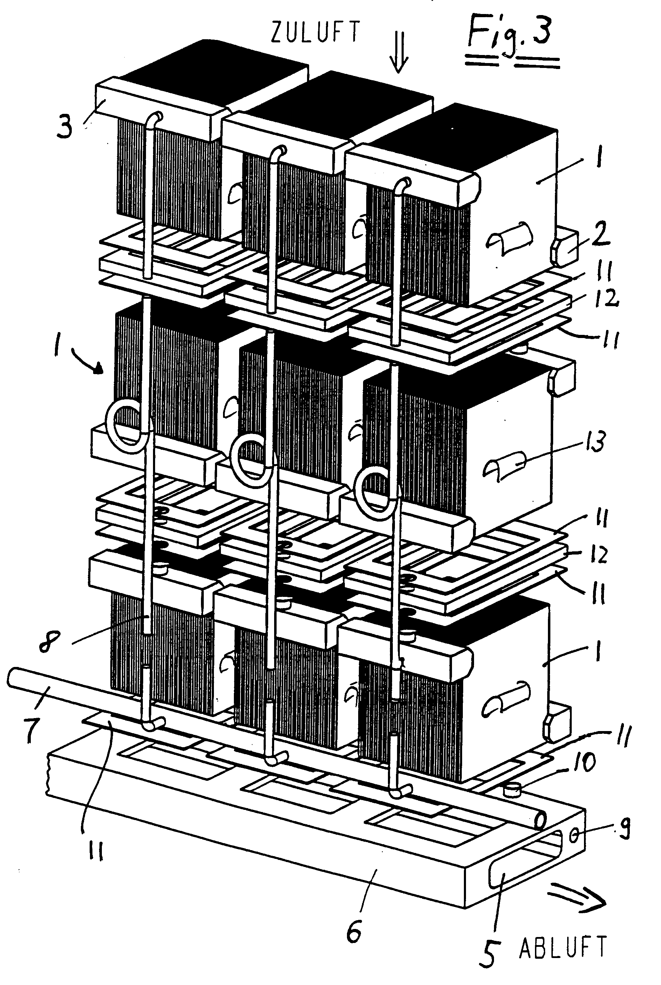

Die zur Funktion der Brennstoffzellen-Blöcke notwendige äußere Brenngasführung ist in Fig. 3 gezeigt und erfolgt mittels zweier Anschlußelemente **2, 3**, die an den Brennstoffzellen-Stacks **1** gasdicht angeschlossen sind. Die Zuführung des Brenngases und die Abführung des Abgases geschieht über seriell montierte mit Zugentlastungen, eventuell auf der Basisplatte **6** fixierten Rohrleitungen **7, 8** und/oder mittels in der Basisplatte **6** integrierter Kanäle **9** und Verbindungselemente **10** zur Herstellung der Verbindung zu den Gasanschlußelementen **2**.

Alternativ kann auch eine interne Brenngasführung vorgesehen werden. Das Brenngas wird über Durchbrüche, die im Randbereich des Brennstoffzellen-Stacks eingelassen werden, geführt.

Für die Erfindung ist wesentlich, daß zwischen Abluftbereich **5** und Zuluftbereich **4** keine absolute Dichtigkeit erforderlich ist. Zum einen werden die Brennstoffzellen mit Luftüberschuß betrieben, zum anderen sind Wirkungsgradeinbußen eines Systems vernachlässigbar, wenn die Leckagen zwischen Zuluft **4** und Abluft **5** Mengen von ca. 5 % der Gesamtzuluft nicht überschreiten.

Dies bedeutet, daß für die Flächendichtung **11**(Fig. 2,3 und 4) keine absolute Dichtigkeit erforderlich ist und auf eine kraftschlüssige Verbindung zwischen Brennstoffzellen-Stacks **1** und Basisplatte **6** verzichtet werden kann. Dies ermöglicht für die Basisplatte **6** die Verwendung kostengünstiger, kommerziell möglicht für die Basisplatte **6** die Verwendung kostengünstiger, kommerziell verfügbarer Werkstoffe, deren thermisches Ausdehnungsverhalten nicht an die Brennstoffzellen-Stacks angepaßt sein muß.

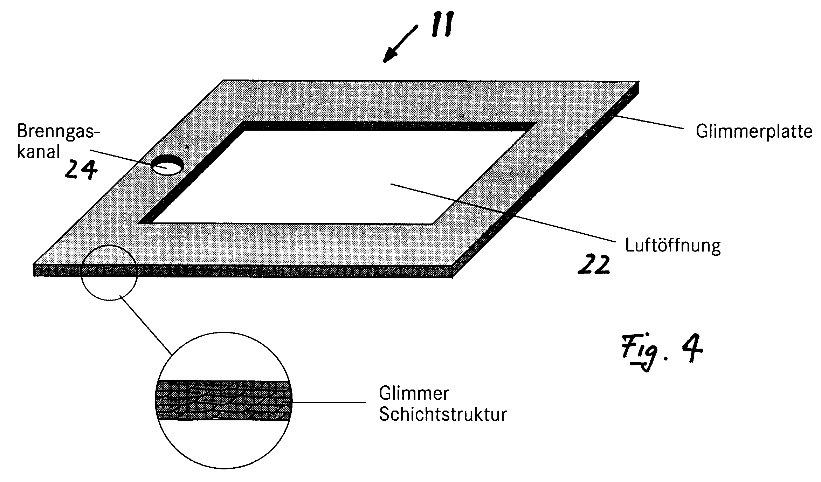

Das wesentliche Element für die Funktionsfähigkeit dieser Anordnung ist die luftseitige Dichtung **11** zwischen den Brennstoffzellen-Stacks und die Dichtung **11** zwischen den Brennstoffzellen-Stacks und der Basisplatte **6** . Die Dichtung ist eine Flächendichtung, die (wie in Fig. 4 dargestellt) aus einer Scheibe besteht und einen Ausgleich eventuell auftretender mechanischer Spannungen bei gleichzeitiger Gewährleistung der Dichtigkeit bei Thermalverformungen zwischen den Brennstoffzellen-Stacks und dem Tragelement zulässt.

Als Dichtwerkstoffe sind insbesondere Schichtstrukturmaterialien wie z.B. Glimmer geeignet, da aufgrund der schwachen Anbindung zwischen den einzelnen Schichten keine Kräfte übertragen werden können. Geeignet sind auch keramische Wirrfaserfließe oder Fasermatten. Die Flächendichtung **11** ist in Fig. 4 deutlich gezeigt und ein vergrösserter Ausschnitt zeigt ihren Aufbau.

Vorteilhaft bei der Bauweise (Fig. 3) ist auch, daß die Brennstoffzellen-Stacks **1** mit ihrem Eigengewicht die Flächendichtung **11** andrücken und zusätzlich bedingt durch den luftseitigen Druckverlust der Brennstoffzellen-Stacks eine Anpresskraft auf den Stack ausgeübt wird.

Fig. 3 zeigt den prinzipiellen Aufbau einer Brennstoffzellen-Moduleinheit, bei der mehrere Brennstoffzellen-Stacks **1** auf einer Basisplatte **6** angeordnet tels Dichtungen **11** und einem Distanzstück **12** aufeinander gestapelt. Dichtungen **11** sind zwischen den einzelnen gestapelten Brennstoffzellen-Stacks sowie zwischen den Brennstoffzellen-Stacks **1** und der Basisplatte **6** vorgesehen. Die Luftzuführung erfolgt seriell vom jeweils obersten Stack eines Stapels zum untersten Stack. Dies hat den Vorteil, daß eine aus verfahrenstechnischen Gründen größere Temperaturspreizung zwischen Zulufttemperatur und Ablufttemperatur erzielt wird. Flächendichtung **11** und Distanzstück **12** weisen jeweils eine zentrale Luftöffnung **22** und eine peripheren Brenngaskanal **24** auf.

Bei der Brenngasversorgung ist sowohl die Realisierung einer parallelen als auch einer seriellen Verschaltung des Brenngases möglich. Eine brenngasseitige serielle Vorschaltung hat den Vorteil, daß hohe Umsatzraten für das Brenngas erreichtbar sind.

Die elektrische Verschaltung der einzelnen Brennstoffzellen-Stacks erfolgt mittels an den Blöcken angeschlossener Stromanschlußlaschen **13**.

Die Basisplatte **6** kann aus hochtemperaturbeständigen Legierungen (z.B. Haynes 214, Inconel 800, Inconel 617 oder Inconel 600 u.ä.) bestehen, oder auch aus keramischen Werkstoffen (z.B. Mullit, SiC, Al₂O₃ u.ä.) hergestellt werden.

Bei der Verwendung von Legierungen ist eine thermische Innenisolation der Abluftkammer **5** vorteilhaft. Hierdurch wird eine thermische Entkoppelung des heißeren Abluftbereichs vom Zuluftbereich sowie eine "Kühlung" der Tragelemente durch die Zuluft erreicht.

In einer vorteilhaften Ausführung kann zur Nachverbrennung das Abgas in das Gehäuse **14** für die Zuluft geführt werden. Alternativ kann das Abgas zur direkten Nachverbrennung auch in den Abluftkanal **5** der Basisplatte **6** eingeleitet werden (nicht gezeigt).

In einer weiteren Ausführung kann die Führung für Abluft und Zuluft vertauscht werden (nicht gezeigt).

Wie bereits in der Beschreibungseinleitung dargelegt, können die Brennstoffzellen der erfindungsgemässen Vorrichtung auch als Elektrolysezellen betrieben werden.

## Patentansprüche

1. Aus mehreren übereinander gestapelten Brennstoffzellen-Stacks bestehender Brennstoffzellen-Modul, mit einer Brenngasführung mittels Rohrleitungen und einer freien Luftzuführung innerhalb eines geschlossenen Gehäuses zu den Brennstoffzellen-Stacks, **dadurch gekennzeichnet**, dass zwischen den übereinander angeordneten Brennstoffzellen-Stacks (**1**) im Stapel jeweils eine Flächendichtung (**11**) angeordnet ist, die eine zentrale Luftöffnung (**22**) und einen peripheren separaten Brenngaskanal (**24**) aufweist, und dass der unterste Brennstoffzellen-Stack (**1**) mittels einer derartigen Dichtung (**11**) auf einer Basisplatte (**6**) angeordnet ist, in die ein Sammelkanal (**5**) für die Abluft und ein Kanal (**9**) für das Brenngas integriert sind.

2. Vorrichtung nach Anspruch 1, **dadurch gekennzeichnet**, dass zwischen den Brennstoffzellen-Stacks (**1**) jeweils eine Flächendichtung (**11**), ein Distanzstück (**12**) mit zentraler Luftöffnung (**22**) und separatem peripherem Brenngaskanal (**24**) und eine weitere Flächendichtung (**11**) angeordnet sind.

3. Vorrichtung nach Anspruch 1 oder 2, **dadurch gekennzeichn**et, dass die Dichtung (**11**) aus Glimmer besteht.

4. Vorrichtung nach Anspruch 3, **dadurch gekennzeichnet**, dass die Dichtung (**11**) eine Schichtstruktur aufweist.
